# EUROPÄISCHE PATENTSCHRIFT

(11) **EP 0 469 397 B1**
(45) Veröffentlichungstag und Bekanntmachung des Hinweises auf die Patenterteilung: **03.01.1996**
(21) Anmeldenummer: 91111997.2
(22) Anmeldetag: 18.07.1991
(51) Int. Cl.: C08K 5/00

(54) **Wässrige Polymerisatdispersionen**
Aqueous polymer dispersions
Dispersions polymères aqueuses

(30) Priorität: 30.07.1990 DE 4024150
(43) Veröffentlichungstag der Anmeldung: 05.02.1992
(73) Patentinhaber: BASF Aktiengesellschaft, D-67063 Ludwigshafen (DE)
(72) Erfinder: Grubert, Heinrich, Dr., W-6900 Heidelberg (DE); Dersch, Rolf, Dr., W-6730 Neustadt (DE)

(56) Entgegenhaltungen:
- EP-A- 0 161 757
- AU-D- 2 703 977
- DE-A- 2 739 708
- FR-A- 2 372 178
- FR-E- 54 291
- PATENT ABSTRACTS OF JAPAN && JP-A-53 022585(KANEGAFUCHI KAGAKU k.k.k.) 3-2-1978

## Beschreibung

Die vorliegende Erfindung betrifft wäßrige Polymerisatdispersionen, die dadurch erhältlich sind, daß man ein Monomerengemisch, das 10 bis 100 Gew.-% an halogenhaltigen Monomeren enthält, nach der Methode der radikalischen Emulsionspolymerisation in wäßrigem Medium polymerisiert, den pH-Wert der wäßrigen Phase der dabei anfallenden wäßrigen Polymerisatdispersion durch Zugabe von Ca(OH)₂ auf einen Wert von 5 bis 10 einstellt und, bezogen auf das Monomerengemisch, 0,005 bis 1 Gew.-% an Thioschwefelsäure und/oder ihrer Salze zusetzt, wobei sowohl die Zugabe der basischen Mittel als auch der wenigstens einen Wirksubstanz vor, während und/oder nach der Emulsionspolymerisation erfolgen kann, mit der Einschränkung, daß Thioschwefelsäure und ihre Salze nur in Kombination mit Ca(OH)₂ als basischem Mittel eingesetzt wird.

Wäßrige Polymerisatdispersionen mit im Polymeranteil eingebauten halogenhaltigen Monomeren eignen sich in vielfältiger Weise als Bindemittel, insbesondere dort, wo auf erhöhte Brandsicherheit Wert gelegt wird, da ihre Verfilmungen eine reduzierte Neigung zum Entflammen aufweisen.

Es ist bekannt, daß die wäßrige Phase von ohne basische Hilfsmittel hergestellten wäßrigen Polymerisatdispersionen in der Regel einen pH-Wert < 5 aufweist, was sich für zahlreiche Verwendungen nachteilig auswirkt, so daß der pH-Wert im allgemeinen durch Zusatz basischer Mittel erhöht wird.

Aus der FR-E-54291 ist bekannt, daß wäßrige Polymerisationsdispersionen dadurch erhalten werden, daß Dichlorethylen und Vinylchlorid nach der Methode der radikalischen Emulsionspolymerisation in wäßrigem Medium (in Anwesenheit von Ammoniumpersulfat) polymerisiert wird und kaustische Soda oder Natriumhydrogencarbonat als basische Mittel und außerdem 1.5 Gew.% Natriumthiosulfat, bezogen auf den Monomergehalt, anwesend sind.

Aus der DE-A 2 246 499 ist bekannt, daß sich ursprünglich weiße Dispersionen mit einpolymerisiertem Vinylchlorid und/oder Vinylidenchlorid im Polymerisatanteil durch Zugabe basischer Stoffe braun verfärben, und daß dieses Verfärben durch Zusatz geringer Mengen wenigstens einer Epoxidverbindung im wesentlichen unterdrückt werden kann. Nachteilig an einem Zusatz von Epoxiden ist jedoch, daß Epoxide auf den Polymerisatanteil der wäßrigen Dispersion gleichzeitig vernetzend wirken.

Aufgabe der vorliegenden Erfindung war daher, wäßrige Polymerisatdispersionen mit einpolymerisierten halogenhaltigen Monomeren im Polymerisatanteil zur Verfügung zu stellen, deren pH-Wert durch Zusatz basischer Mittel auf einen Wert von 5 bis 10 eingestellt wird und die ebenso wie ihre Verfilmungen durch Zusatz einer von Epoxiden verschiedenen Wirksubstanz auch nach längerer Lagerung im wesentlichen keine Verfärbung aufweisen.

Demgemäß wurden die eingangs definierten wäßrigen Polymerisatdispersionen gefunden. Mit besonderem Vorteil werden als Wirksubstanz die Thioschwefelsäure und ihre Salze, insbesondere die Alkalimetallthiosulfate, eingesetzt.

Bevorzugte halogenhaltige Monomere sind Vinylbromid, Vinylchlorid und Vinylidenchlorid, unter denen Vinylchlorid und Vinylidenchlorid besonders bevorzugt werden. Als Comonomere eignen sich beispielsweise Ester der Acryl- oder Methacrylsäure mit 1 bis 10 C-Atome enthaltenden aliphatischen Alkoholen, wobei die Methyl-, Ethyl-, Isopropyl-, n-, iso- und tert.Butyl-, n-Hexyl- sowie 2-Ethylhexylester bevorzugt sind. Ferner eignen sich als Comonomere α,β-monoethylenisch ungesättigte Carbonsäuren wie Acryl- und Methacrylsäure, Vinylester niederer Alkancarbonsäuren wie Vinylacetat und Vinylpropionat, Nitrile von niederen α,β-monoethylenisch ungesättigten Carbonsäuren wie Acrylnitril und Methacrylnitril sowie die Amide dieser Carbonsäuren, Acrylsäure- oder Methacrylsäureester mit niederen mehrwertigen Alkoholen, ungesättigte Sulfon- und Phosphonsäuren, aber z.B. auch niedere einfach- oder mehrfach ungesättigte Kohlenwasserstoffe wie Ethylen, Propen und Butadien. Vorzugsweise enthält das zu polymerisierende Monomerengemisch, bezogen auf die Gesamtmenge der Monomeren, 20 bis 90 Gew.-% an halogenhaltigen Monomeren.

Geeignete Polymerisationsinitiatoren sind vor allem anorganische Peroxide wie Natrium-, Kalium- oder Ammoniumperoxidisulfat und Wasserstoffperoxid. Ferner eignen sich Azoverbindungen wie 2,2'-Azobisisobutyronitril sowie organische Peroxide wie Dibenzoylperoxid, t-Butylperpivalat oder Hydroperoxide wie t-Butylhydroperoxid, aber auch kombinierte Systeme, die aus wenigstens einem organischen Reduktionsmittel und wenigstens einem Peroxid und/oder Hydroperoxid zusammengesetzt sind, z.B. t-Butylhydroperoxid und das Na-Salz der Hydroxymethansulfinsäure, sowie kombinierte Systeme, die darüberhinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Natriumperoxidisulfat, wobei anstelle von Ascorbinsäure auch häufig das Na-Salz der Hydroxymethansulfinsäure, Natriumsulfit, Natriumhydrogensulfit oder Natriummetabisulfit eingesetzt werden.

Die für die Emulsionspolymerisation eingesetzte Menge an Polymerisationsinitiatoren wird vorzugsweise niedrig gehalten und liegt, bezogen auf die Monomeren, in der Regel bei 0,05 bis 1 Gew.-%, vorzugsweise beträgt ihr Anteil 0,1 bis 0,3 Gew.-%. Weniger bevorzugt sind Mengen von bis zu 10 Gew.-%.

Als Emulgatoren können sowohl anionische, kationische als auch nichtionische Emulgatoren sowie verträgliche Mischungen derselben eingesetzt werden. Bezogen auf das Gesamtgewicht der zu polymerisierenden Monomeren beträgt ihr Gewichtsanteil in der Regel 0,05 bis 10 Gew.-%. Mit besonderem Vorteil werden ausschließlich nichtionische und anionische Emulgatoren sowie deren Gemische verwendet.

Vorzugsweise eingesetzte nichtionische Emulgatoren sind ethoxylierte Alkanole (EO-Grad: 2 bis 100, Alkylrest: C₈ bis C₃₆), ethoxylierte 1 bis 4 olefinische Doppelbindungen enthaltende Alkohole (EO-Grad: 2 bis 100, Kettenlänge: C₈ bis C₃₆), ethoxylierte mono-, di- oder tri-Alkylphenole oder -naphthole (EO-Grad: 2 bis 100, Alkylrest: C₄ bis C₃₆), ethoxylierte aliphatische Monocarbonsäuren (EO-Grad: 6 bis 50, Alkylrest: C₈ bis C₂₄) und ethoxylierte 1 bis 4 olefinische Doppelbindungen enthaltende Monocarbonsäuren (EO-Grad: 6 bis 50, Alkylrest: C₈ bis C₂₄).

In vorteilhafter Weise eingesetzte anionische Emulgatoren sind die Alkalimetall- und Ammoniumsalze der sulfatierten Derivate von 6 bis 18 C-Atome enthaltenden Alkanolen, 6 bis 18 C-Atome und 1 bis 4 olefinische Doppelbindungen enthaltenden Alkoholen, ethoxylierten Alkanolen (EO-Grad: 4 bis 30, Alkylrest: C₁₂ bis C₁₈), ethoxylierten 1 bis 4 olefinische Doppelbindungen enthaltenden Alkoholen (EO-Grad: 4 bis 30, Alkylrest: C₁₂ bis C₁₈) und von ethoxylierten Alkylphenolen (EO-Grad: 4 bis 30, Alkylrest: C₈ bis C₁₄), die Alkalimetall- und Ammoniumsalze gesättigter und ungesättigter Carbonsäuren (Kettenlänge: C₈ bis C₂₄), die Alkalimetall- und Ammoniumsalze von 12 bis 18 C-Atome enthaltenden Alkylsulfonsäuren sowie die entsprechenden Salze von Alkylarylsulfonsäuren (Alkylrest: C₁₀ bis C₁₈) und von Estern der Sulfobernsteinsäure mit 4 bis 18 C-Atomen enthaltenden Alkoholen.

Neben Emulgatoren können auch Schutzkolloide als grenzflächenaktive Substanzen bei der Emulsionspolymerisation mitverwendet werden. Geeignete Schutzkolloide sind z.B. hochmolekulare Verbindungen wie Polyvinylalkohole, Polyvinylpyrrolidone, Cellulosederivate, Polyacrylamide, Polymethacrylamide, Polycarbonsäuren oder deren Alkalimetall- oder Ammoniumsalze. Weiterhin können im Rahmen der Emulsionspolymerisation auch das Molekulargewicht regelnde Substanzen mitverwendet werden.

Die Emulsionspolymerisationstemperatur beträgt in der Regel 30 bis 90°C. Besonders an Verfärbungen freie erfindungsgemäße Dispersionen werden jedoch dann erhalten, wenn die Emulsionspolymerisationstemperatur 30 bis 70°C beträgt. Das Polymerisationsmedium kann sowohl nur aus Wasser, als auch aus Mischungen aus Wasser und damit mischbaren Flüssigkeiten wie

Methanol bestehen. Vorzugsweise wird nur Wasser verwendet. Die Emulsionspolymerisation kann sowohl als Chargenprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt und anschließend den Rest in getrennten Zuläufen, von denen einer oder mehrere die Monomeren in reiner oder in emulgierter Form enthalten, kontinuierlich, stufenweise oder unter Überlagerung eines Konzentrationsgefälles zuführt. Der Feststoffgehalt der so erhältlichen wäßrigen Polymerisatdispersion beträgt im allgemeinen 5 bis 60 Gew.-%.

Als basische Mittel für die Erhöhung des pH-Wertes wird Ca(OH)₂ eingesetzt.

Überraschenderweise weisen sowohl die erfindungsgemäßen wäßrigen Polymerisatdispersionen als auch deren Verfilmungen, auch nach längerer Lagerung, im wesentlichen keine Verfärbung auf.

### Beispiele

a) Herstellung von Ausgangsdispersionen D 1 bis D 8
- D 1:: Eine Mischung aus 25 kg Wasser, 0,02 kg Emulgator I, 0,03 kg Natriumperoxidisulfat (Na₂S₂O₈) und 0,0005 kg Eisen(II)sulfat-Heptahydrat (FeSO₄ . 7 H₂O) wurde auf die Polymerisationstemperatur von 50°C erhitzt und mit 5 % eines Zulaufs 1 sowie 5 % eines Zulaufs 2 versetzt und während 15 min bei 50°C gehalten. Anschließend wurden unter Aufrechterhaltung der Polymerisationstemperatur synchron die verbliebene Menge an Zulauf 1 sowie die verbliebene Menge an Zulauf 2 und ein Zulauf 3 während 3,5 h kontinuierlich zugesetzt. Danach wurden ebenfalls bei 50°C während 30 min ein Zulauf 4 und während 1 h ein Zulauf 5 kontinuierlich zugeführt. Nachfolgend wurde unter Zugabe einer Mischung aus 0,12 kg einer 70 gew.-%igen wäßrigen-alkoholischen Lösung von t-Butylhydroperoxid und 0,05 kg Emulgator I in 0,35 kg Wasser und anschließender Zugabe von 0,17 kg des Na-Salzes der Hydroxymethansulfinsäure in 0,35 kg Wasser bei Raumtemperatur nachpolymerisiert.

Zulauf 1:

| | |
|---|---|
| 55 kg | Vinylchlorid |
| 10 kg | Vinylpropionat |
| 35 kg | n-Butylacrylat |
| 1,7 kg | Emulgator II |
| 0,78 kg | Emulgator I und |
| 41 kg | Wasser |

Zulauf 2:

| | |
|---|---|
| 0,003 kg | Na-Salz der Hydroxymethansulfinsäure |
| 0,125 kg | Natriumacetat und |
| 14 kg | Wasser |

Zulauf 3:

| | |
|---|---|
| 0,162 kg | Natriumperoxidisulfat und |
| 12 kg | Wasser |

Zulauf 4:

| | |
|---|---|
| 0,048 kg | Natriumperoxidisulfat und |
| 4 kg | Wasser |

Zulauf 5:

| | |
|---|---|
| 0,0018 kg | Na-Salz der Hydroxymethansulfinsäure |
| 0,0273 kg | Natriumacetat und |
| 4 kg | Wasser |

- Emulator I:: Na-Salz des sulfatierten Derivats von ethoxyliertem iso-Octylphenol (EO-Grad: 25)
- Emulgator II:: ethoxyliertes iso-Octylphenol (EO-Grad: 25)
- D 2 bis D 4:: Wie D 1, jedoch wurde die Emulsionspolymerisation in der genannten Abfolge anstelle von 50°C bei 60, 70 sowie 80°C durchgeführt.
- D 5 bis D 8:: In der genannten Abfolge wie D 1 bis D 4, jedoch wurde die Menge an eingesetztem Natriumperoxidisulfat jeweils um 50 % erhöht.

b) Zusatz von basischen Mitteln sowie von Wirksubstanzen zu den Dispersionen D 1 bis D 8 und überprüfung auf Verfärbung

Der pH-Wert der wäßrigen Phase der Dispersionen D 1 bis D 8 wurde jeweils durch Zusatz von Ammoniak, KOH, NaOH sowie Ca(OH)₂ auf einen Wert von 8 erhöht und anschließend wurden, bezogen auf den Feststoffgehalt der wäßrigen Dispersionen, jeweils 0,1 Gew.-% der nachfolgenden Wirksubstanzen zugesetzt und die Verfärbung visuell beurteilt:

Glycerin, Pivalinsäure, Paraldehyd, 2,6-Di-tert.-butyl-p-kresol, Benzophenon, Natriumoxalat und Natriumthiosulfat.

Bei der Verwendung von Ammoniak trat eine deutliche Gelbfärbung auf, wohingegen bei Verwendung von KOH und NaOH nur ein minimaler Gelbstich und bei Verwendung von Ca(OH)₂ keine Verfärbung auftrat. Den härtesten Weißton wies die Dispersion auf, die Ca(OH)₂ und Natriumthiosulfat enthielt. Anschließend wurden die Dispersionen verfilmt, im Trockenschrank bei 50°C 14 Tage gelagert und wieder visuell auf Verfärbung beurteilt. Die Ergebnisse entsprachen jenen für den flüssigen Zustand.

## Patentansprüche (Patentansprüche für folgende(n) Vertragsstaat(en): BE, CH, DE, FR, GB, LI, NL)

1. Wäßrige Polymerisatdispersion, dadurch erhältlich, daß man ein Monomerengemisch, das 10 bis 100 Gew.-% an halogenhaltigen Monomeren enthält, nach der Methode der radikalischen Emulsionspolymerisation in wäßrigem Medium polymerisiert, den pH-Wert der wäßrigen Phase der dabei anfallenden wäßrigen Polymerisatdispersion durch Zugabe von Ca(OH)₂ auf einen Wert von 5 bis 10 einstellt und, bezogen auf das Monomerengemisch, 0,005 bis 1 Gew.-% an Thioschwefelsäure und/oder ihrer Salze zusetzt, wobei sowohl die Zugabe an Ca(OH)₂ als auch an Thioschwefelsäure und/oder ihrer Salze vor, während und/oder nach der Emulsionspolymerisation erfolgen kann.

## Patentansprüche (Patentansprüche für folgende(n) Vertragsstaat(en): ES)

1. Verfahren zur Herstellung wäßriger Polymerisatdispersionen, dadurch gekennzeichnet, daß man ein Monomerengemisch, das 10 bis 100 Gew.-% an halogenhaltigen Monomeren enthält,nach der Methode der radikalischen Emulsionspolymerisation in wäßrigem Medium polymerisiert, den pH-Wert der wäßrigen Phase der dabei anfallenden wäßrigen Polymerisatdispersion durch Zugabe von Ca(OH)₂ auf einen Wert von 5 bis 10 einstellt und, bezogen auf das Monomerengemisch, 0,005 bis 1 Gew.-% an Thioschwefelsäure und/oder ihrer Salze zusetzt, wobei sowohl die Zugabe an Ca(OH)₂ als auch an Thioschwefelsäure und/oder ihrer Salze vor, während und/oder nach der Emulsionspolymerisation erfolgen kann.

## Claims (Claims for the following Contracting State(s): BE, CH, DE, FR, GB, LI, NL)

1. An aqueous polymer dispersion obtainable by polymerizing a monomer mixture which contains from 10 to 100 % by weight of halogenated monomers by free-radical emulsion polymerization in aqueous medium, adjusting the pH of the aqueous phase of the resulting aqueous polymer dispersion to from 5 to 10 by addition of Ca(OH)₂, and adding from 0.005 to 1 % of the weight of the monomer mixture of thiosulfuric acid and/or salts thereof, it being possible to add both the Ca(OH₂) and the thiosulfuric acid and/or salts thereof before, during and/or after the emulsion polymerization.

## Claims (Claims for the following Contracting State(s): ES)

1. A process for the preparation of an aqueous polymer dispersion which comprises polymerizing a monomer mixture which contains from 10 to 100 % by weight of halogenated monomers by free-radical emulsion polymerization in aqueous medium, adjusting the pH of the aqueous phase of the resulting aqueous polymer dispersion to from 5 to 10 by addition of Ca(OH)₂, and adding from 0.005 to 1 % of the weight of the monomer mixture of thiosulfuric acid and/or salts thereof, it being possible to add both the Ca(OH₂) and the thiosulfuric acid and/or salts thereof before, during and/or after the emulsion polymerization.

## Revendications (Revendications pour l'(les) Etat(s) contractant(s) suivant(s): BE, CH, DE, FR, GB, LI, NL)

1. Dispersion aqueuse de polymère que l'on peut obtenir par le fait que l'on polymérise un mélange de monomères qui contient de 10 à 100% en poids de monomères halogénés, selon la méthode de la polymérisation en émulsion radicalaire en milieu aqueux, on règle la valeur du pH de la phase aqueuse de la dispersion aqueuse de polymère présente à 5-10 par l'addition de Ca(OH)₂ et on ajoute, par rapport au mélange des monomères, de 0,005 à 1% en poids d'acide thiosulfurique et/ou de ses sels, où aussi bien l'addition du Ca(OH)₂ que de l'acide thiosulfurique et/ou de ses sels peut s'effectuer avant, pendant et/ou après la polymérisation en émulsion.

## Revendications (Revendications pour l'(les) Etat(s) contractant(s) suivant(s): ES)

1. Procédé de préparation de dispersions aqueuses de polymères, caractérisé en ce que l'on polymérise un mélange de monomères qui contient de 10 à 100% en poids de monomères halogénés, selon la méthode de la polymérisation en émulsion radicalaire en milieu aqueux, on règle la valeur du pH de la phase aqueuse de la dispersion aqueuse de polymère présente à 5-10 par l'addition de Ca(OH)₂ et on ajoute, par rapport au mélange des monomères, de 0,005 à 1% en poids d'acide thiosulfurique et/ou de ses sels, où aussi bien l'addition du Ca(OH)₂ que de l'acide thiosulfurique et/ou de ses sels peut s'effectuer avant, pendant et/ou après la polymérisation en émulsion.
